**Europäisches Patentamt**

**European Patent Office**

**Office européen des brevets**

(19)

(11) Numéro de publication : **0 402 375 B1**

(12) # FASCICULE DE BREVET EUROPEEN

(45) Date de publication du fascicule du brevet :
**10.06.92 Bulletin 92/24**

(51) Int. Cl.$^5$ : **C02F 1/48,** C23F 15/00,
H03K 5/01

(21) Numéro de dépôt : **89902626.4**

(22) Date de dépôt : **01.03.89**

(86) Numéro de dépôt international :
**PCT/BE89/00007**

(87) Numéro de publication internationale :
**WO 89/08080 08.09.89 Gazette 89/21**

(54) **GENERATEUR D'IMPULSIONS ELECTRIQUES POUR REDUIRE LA FORMATION D'INCRUSTATIONS DE SELS SUR UNE PAROI.**

(30) Priorité : **03.03.88 FR 8802690**

(43) Date de publication de la demande :
**19.12.90 Bulletin 90/51**

(45) Mention de la délivrance du brevet :
**10.06.92 Bulletin 92/24**

(84) Etats contractants désignés :
**AT BE CH DE FR GB IT LI LU NL SE**

(56) Documents cités :
**DE-C- 0 727 627
FR-A- 0 798 039
FR-A- 1 007 100**

(56) Documents cités :
**FR-A- 2 388 768
FR-A- 2 602 302
US-A- 3 637 482
US-A- 3 646 578**

(73) Titulaire : **FABECK, Claude
Rue du Luxembourg 60
B-1040 Bruxelles (BE)**

(72) Inventeur : **FABECK, Claude
Rue du Luxembourg 60
B-1040 Bruxelles (BE)**

(74) Mandataire : **Vanderperre, Robert et al
Bureau Vander Haeghen S.A. Rue Colonel
Bourg 108 A
B-1040 Bruxelles (BE)**

## Description

### Domaine technique

La présente invention concerne un dispositif pour engendrer des impulsions électriques pour alimenter un dispositif destiné à créer un champ électromagnétique au sein d'un liquide afin de réduire la formation d'incrustations de sels sur une paroi en contact avec le liquide, par exemple les conduites de distribution d'eau et les parois d'appareils divers.

### Art antérieur

On sait depuis longtemps que le courant électrique a un effet physique sur le phénomène de la formation des incrustations de sels, communément appelées tartre, qui se produisent sur les parois en contact avec un liquide aqueux. Le document FR-A-2586285, par exemple, décrit un dispositif utilisant des relais électromagnétiques pour créer un champ électromagnétique au sein d'un liquide. Le document FR-A-1007100, quant à lui, décrit un procédé et un dispositif pour créer un champ électrique périodique dans un liquide au moyen d'impulsions électriques appliquées à des électrodes plongées dans le liquide. Un procédé analogue, décrit dans le document FR-A-2602302, utilise des salves de signaux d'onde carrée qui se trouvent appliquées à une antenne non plongée dans le liquide pour créer des chocs électriques dans celui-ci. Aucun de ces brevets ne décrit cependant un dispositif susceptible de générer un champ électromagnétique pulsé.

On sait d'autre part que l'on peut engendrer un signal électrique ayant une forme d'onde particulière. Le document US-A-3646578 décrit un circuit capable de produire une impulsion raide de courte durée suivie d'un long signal de niveau plus faible que celui de l'impulsion initiale. Un tel signal est utilisé comme signal de commande appliqué à la gâchette d'un thyristor.

### Exposé de l'invention

Le but de l'invention est de produire des salves d'impulsions électriques dans lesquelles les impulsions ont des formes d'onde conformées particulièrement de manière à produire un champ électromagnétique ayant un effet optimal au sein d'un liquide afin de réduire ou éviter la formation des incrustations de sels sur une paroi en contact avec le liquide.

Cet objectif est atteint, grâce à l'invention, par un générateur d'impulsions électriques pour réduire la formation d'incrustations de sels sur une paroi en contact avec un liquide, lequel générateur d'impulsions, qui comprend un circuit générateur de signaux produisant des salves de signaux successives alimentant un moyen couplé avec ladite paroi de manière à transmettre au liquide des chocs électriques répétés, est remarquable en ce que dans chaque salve de signaux, chaque signal est conformé de manière que sa forme d'onde présente un flanc avant qui varie quasi instantanément entre le niveau de base du signal et une première amplitude de crête et un flanc arrière comprenant un premier tronçon qui varie entre la première amplitude de crête et une deuxième amplitude, un palier de niveau sensiblement constant et un second tronçon qui varie entre ledit palier et le niveau de base du signal, et en ce que le moyen couplé avec la paroi en contact avec le liquide est un transmetteur agencé pour induire un champ électromagnétique pulsé dans le liquide.

### Description des dessins

L'invention est exposée plus en détail dans ce qui suit à l'aide des dessins ci-annexés.
– La figure 1 est un schéma fonctionnel par blocs d'un exemple de mode de réalisation du dispositif selon l'invention,
– La figure 2 est un schéma d'un mode d'exécution exemplaire du dispositif selon la figure 1,
– La figure 3 illustre une salve de signaux exemplaire suivant l'invention,
– La figure 4 représente à plus grande échelle un exemple de forme d'onde d'un signal dans la salve illustrée à la figure 3.

### Description d'un mode de réalisation exemplaire

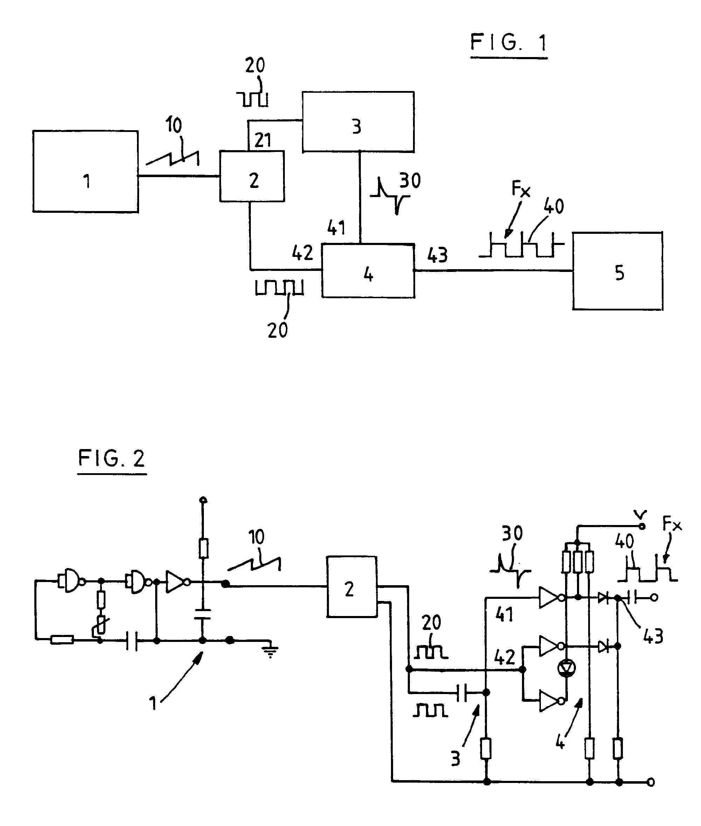

Se reportant à la figure 1, le bloc 1 représente un générateur de base de temps réglable organisé pour produire un signal en forme de dents de scie 10 destiné à commander un oscillateur 2. Il s'agit d'un oscillateur commandé par la tension, qui produit des signaux de niveau sensiblement constant, dans une bande de fréquences de 500 à 50.000 Hz environ. Un oscillateur commandé en tension est un dispositif connu en soi, qui peut être réalisé suivant divers montages relevant de la compétence normale de l'homme de l'art. La plage de fréquences de travail de l'oscillateur dans la bande de fréquences précitée est ajustée en fonction du diamètre des conduites.

Le but de l'invention est de produire des salves successives de signaux, dans lesquelles les signaux ont des formes d'onde conformées de manière particulière afin de produire un champ électromagnétique ayant un effet optimal au sein d'un liquide afin de réduire ou éviter la formation d'incrustations de sels sur une paroi en contact avec le liquide.

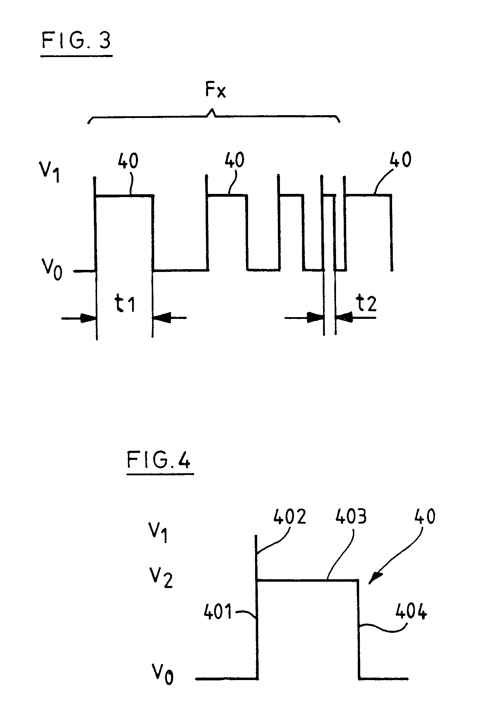

Dans le mode de réalisation exemplaire illustré dans les dessins joints, l'oscillateur 2 est prévu avec deux sorties 21 et 22. Les signaux 20 présents à la sortie 21 sont reçus dans un différentiateur 3 agencé pour différentier les flancs montants et descendants des signaux de l'oscillateur. A la sortie du différentiateur 3 apparaissent des impulsions très brèves 30, quasi instantanées 30. Un sommateur 4 est connecté pour recevoir à une première entrée 41 les pics de tension 30 du différentiateur 3 et à une seconde entrée 42 les signaux 20 présents à la sortie 22 de l'oscillateur 2, et pour produire à sa sortie 43 des salves successives 40. Une salve exemplaire est représentée à la figure 3. On voit que la salve Fx comprend plusieurs signaux 40 de durées variables, les durées décroissant de t1 à t2. Les durées des signaux dans une salve peuvent aussi être croissantes ou même être égales. Chaque signal a une forme d'onde qui présente un flanc avant raide 401 (figure 4) croissant jusqu'à une première amplitude de crête V1 et un flanc arrière comprenant un premier tronçon descendant 402 allant de la première amplitude de crête V1 à une deuxième amplitude V2, un palier 403 de niveau sensiblement constant et un second tronçon descendant 404 allant du palier V2 au niveau de base V0 du signal. Le front avant de chaque signal 40 atteint ainsi un niveau de tension ,instantané nettement supérieur au niveau de palier V2 du signal, par exemple 10 volts par rapport au niveau de base du signal, avec de préférence une différence d'amplitude d'au moins 2 volts entre l'amplitude de crête V1 et le niveau V2 du palier 403. Les paliers 403 dans une salve Fx peuvent avoir des durées décroissantes ou croissantes ou encore avoir une durée constante.

Les salves de signaux Fx peuvent être utilisées pour attaquer un transmetteur quelconque 5 servant à produire un champ électromagnétique au sein d'un liquide. Le transmetteur peut par exemple être constitué d'une antenne destinée à être couplée avec une paroi d'un dispositif contenant le liquide (réservoir ou conduite par exemple) de manière à induire un champ électromagnétique au sein du liquide. Le signal conformé selon l'invention s'est avéré optimiser l'action du champ électromagnétique produit par le transmetteur sur la formation des incrustations de tartre sur les parois en contact avec le liquide. L'inventeur considère que le résultat favorable obtenu grâce à l'utilisation de signaux électriques conformés selon l'invention est dû à l'effet du choc énergétique du champ électromagnétique résultant de la forme d'onde particulière des signaux d'attaque, qui produit une transformation énergique quasi instantanée de la structure cristalline des incrustations de sels.

Divers circuits et montages peuvent être utilisés pour réaliser les fonctions des dispositifs agencés selon l'invention. Un mode d'exécution exemplaire pour les blocs 1, 3 et 4 est illustré dans la figure 2. Le générateur se complète d'un circuit d'alimentation produisant les tensions continues requises pour alimenter les circuits intégrés utilisés dans les montages.

## Revendications

1. Générateur d'impulsions électriques pour réduire la formation d'incrustations de sels sur une paroi en contact avec un liquide, lequel générateur d'impulsions comprend un circuit générateur de signaux produisant des salves de signaux successives alimentant un moyen couplé avec ladite paroi de manière à transmettre au liquide des chocs électriques répétés, caractérisé en ce que dans chaque salve (Fx) de signaux, chaque signal (40) est conformé de manière que sa forme d'onde présente un flanc avant (401) qui varie quasi instantanément entre le niveau de base (V0) du signal et une première amplitude de crête (V1) et un flanc arrière comprenant un premier tronçon (402) qui varie entre la première amplitude de crête et une deuxième amplitude (V2), un palier (403) de niveau sensiblement constant (V2) et un second tronçon (404) qui varie entre ledit palier et le niveau de base (V0) du signal, et en ce que le moyen couplé avec la paroi en contact avec le liquide est un transmetteur (5) agencé pour induire un champ électromagnétique pulsé dans le liquide.

2. Dispositif selon la revendication 1, caractérisé en ce que le circuit générateur de signaux comprend un générateur (1-2) de signaux carrés (20), des moyens (3) pour produire des impulsions quasi instantanées (30) et des moyens (4) pour superposer les impulsions quasi instantanées (30) aux signaux carrés (20).

3. Dispositif selon la revendication 2, caractérisé en ce qu'il comprend un oscillateur électronique (2) pour engendrer un signal périodique de fréquence prédéterminée, un générateur de base de temps (1) pour commander l'oscillateur (2) afin de produire une suite de signaux de forme sensiblement carrée (20), un circuit différentiateur (3) connecté pour recevoir les signaux produits par l'oscillateur (2) et différentier les fronts transitionnels des signaux (20) afin de produire des impulsions quasi instantanées (30) et un circuit sommateur (4) connecté pour recevoir les signaux de sortie (20) de l'oscillateur (2) et les impulsions de sortie (30) du circuit différentiateur (3) de manière à produire une salve de signaux (Fx) dans laquelle chaque signal (40) comprend une impulsion (30) superposée à un signal carré (20).

4. Dispositif selon la revendication 3, caractérisé en ce que l'oscillateur (2) est un oscillateur commandé en tension.

5. Dispositif selon la revendication 3 ou 4, caractérisé en ce que l'oscillateur (2) produit des signaux (20) ayant une fréquence variable.

6. Dispositif selon l'une quelconque des revendications précédente, caractérisé en ce que chaque salve (Fx) de signaux comprend des signaux (40) de durées variables.

7. Dispositif selon l'une quelconque les revendications précédentes, caractérisé en ce que le palier (403) de chaque signal (40) dans une salve (Fx) a une durée différente.

8. Dispositif selon l'une quelconque des revendications précédentes, caractérisé en ce que la première amplitude de crête (V1) a un niveau d'au moins dix volts par rapport au niveau de base (V0) du signal.

9. Dispositif selon l'une quelconque des revendications précédentes, caractérisé en ce que la différence de niveau entre la première amplitude de crête (V1) et la deuxième amplitude est d'au moins deux volts.

## Patentansprüche

1. Elektrischer Impulsgenerator zur Verringerung der Salzkrustenbildung auf einer Wand in Kontakt mit einer Flüssigkeit, der eine Signalerzeugungsschaltung zur Erzeugung von Salven von aufeinanderfolgenden Signalen enthält, welche eine mit der Wand gekuppelte Einrichtung in der Weise erregt, daß in die Flüssigkeit wiederholte elektrische Schocks gesendet werden, dadurch gekennzeichnet, daß innerhalb ,jeder Salve (Fx) der Signale jedes Signal (40) in der Weise ausgebildet ist, daß seine Wellenform eine vordere Flanke (401) bildet, die gewissermaßen augenblicklich zwischen dem Basisniveau (V0) des Signals und einer ersten Spitzenwertamplitude (V1) variiert und daß eine rückwärtige Flanke einen ersten Abschnitt (402) umfaßt, der zwischen der ersten Spitzenwertamplitude und einer zweiten Amplitude (V2) variiert, daß die rückwärtige Flanke noch einen Sockelwert (403) von im wesentlichen konstanten Niveau (V2) und einen zweiten Abschnitt (404) umfaßt, der zwischen dem Sockelwert und dem Basisniveau (V0) des Signals variiert, und daß die an die Wand angekuppelte und mit der Flüssigkeit in Kontakt stehende Einrichtung ein Sender (5) ist, der zur Induktion eines pulsierenden elektromagnetischen Feldes in die Flüssigkeit betrieben wird.

2. Vorrichtung nach Anspruch 1, dadurch gekennzeichnet, daß die Signalerzeugungsschaltung einen Generator (1-2) von Rechtecksignalen (20), Mittel (3) zur Erzeugung von gewissermaßen augenblicklichen Impulsen (30) und Mittel (4) zur Überlagerung der gewissermaßen augenblicklichen Impulse (30) mit den Rechtecksignalen (20) aufweist.

3. Vorrichtung nach Anspruch 2, dadurch gekennzeichnet, daß sie einen elektronischen Oszillator (2) zur Erzeugung periodischer Signale vorbestimmter Frequenz, einen Basiszeit-Generator (1) zur Steuerung des Oszillators (2) zur Erzeugung einer Folge von im wesentlichen rechteckigen Signalen (20), eine Differentiatorschaltung (3), die zum Empfang der vom Oszillator (2) erzeugten Signale geschaltet und zum Differenzieren der Vorderflanken der Signale (20) zur Produktion der gewissermaßen augenblicklichen Impulse (30) geschaltet ist, und eine Summierschaltung (4) umfaßt, die zum Empfang der Ausgangssignale (20) des Oszillators (2) und der Ausgangssignale (30) der Differentiatorschaltung (3) verbunden ist, um eine Salve von Signalen (Fx) zu erzeugen, in welcher jedes Signal (40) einen mit einem Rechtecksignal (20) überlagerten Impuls (30) aufweist.

4. Vorrichtung nach Anspruch 3, dadurch gekennzeichnet, daß der Oszillator (2) spannungsgesteuert ist.

5. Vorrichtung nach .Anspruch 3 oder 4, dadurch gekennzeichnet, daß der Oszillator (2) Signale (20) mit variabler Frequenz erzeugt.

6. Vorrichtung nach einem der vorhergehenden Ansprüche, dadurch gekennzeichnet, daß jede Salve (Fx) der Signale Signale (40) variabler Dauer umfaßt.

7. Vorrichtung nach einem der vorhergehenden Ansprüche, dadurch gekennzeichnet, daß der Sockelwert (403) jedes Signals (40) in der Salve (Fx) eine unterschiedliche Dauer aufweist.

8. Vorrichtung nach einem der vorhergehenden Ansprüche, dadurch gekennzeichnet, daß die erste Spitzenwertamplitude (V1) ein Niveau von mindestens 10 Volt mit Bezug auf das Basisniveau (V0) des Signals aufweist.

9. Vorrichtung nach einem der vorhergehenden Ansprüche, dadurch gekennzeichnet, daß die Niveaudifferenz zwischen der ersten Spitzenwertamplitude (V1) und der zweiten Amplitude mindestens 2 Volt beträgt.

## Claims

1. Electric pulse generator for reducing the formation of salt incrustations on a wall which is in contact with a liquid, which pulse generator comprises a signal generating circuit producing bursts of successive signals feeding means coupled to said wall so as to apply repeated electric shocks to the liquid, characterised in that each signal (40) in every burst (Fx) is shaped such that its waveform has a leading edge (401) which varies quasi instantaneously from a base level (V0) of the signal to a first peak amplitude (V1) and a trailing edge including a first portion (402) which varies from the first peak amplitude to a second amplitude (V2), a level run (403) of substantially constant level (V2) and a second portion (404) which varies from said level run to the base level (V0) of the signal, and in that the means coupled to the wall in contact with the liquid is a transmitter (5) arranged for inducing a pulsed electromagnetic field in the liquid.

2. A device according to claim 1, characterised in that the signal generating circuit comprises a square wave generator (1-2), means (3) for producing quasi instantaneous pulses (30) and means (4) for superimposing the quasi instantaneous pulses (30) to the square signals (20).

3. A device according to claim 2, characterised in that it comprises an electronic oscillator (2) for generating a periodic signal of predetermined frequency, a time base generator (1) for driving the oscillator (2) in order to produce a sequence of signals (20) having substantially a square shape, a differentiating circuit (3) connected to receive the signals produced by the oscillator (2) and to differentiate the transitional edges of the signals (20) thereby to produce quasi instantaneous pulses (30), and an adding circuit (4) connected to receive the output signals (20) from the oscillator (2) and the output pulses (30) from the differentiating circuit (3) thereby to produce a signal burst (Fx) in which each signal (40) is comprised of a pulse (30) superimposed to a square signal (20).

4. A device according to claim 3, characterised in that the oscillator (2) is a voltage controlled oscillator.

5. A device according to claim 3 or 4, characterised in that the oscillator (2) produces signals (20) having a varying frequency.

6. A device according to any one of the preceding claims, characterised in that every signal burst (Fx) includes signals (40) having variable durations.

7. A device according to any one of the preceding claims, characterised in that the level run (403) in each signal (40) in a burst (Fx) has a different duration.

8. A device according to any ane of the preceding claims, characterised in that the first peak amplitude (V1) has a level difference of at least 10 volts in relation to the base level (V0) of the signal.

9. A device according to any one of the preceding claims, characterised in that the level difference between the first peak amplitude (V1) and the second amplitude is at least two volts.

FIG. 1

FIG. 2

FIG. 3

FIG.4